(19) Europäisches Patentamt / European Patent Office / Office européen des brevets

(11) **EP 4 718 852 A1**

(12) **EUROPEAN PATENT APPLICATION**

(43) Date of publication:
**01.04.2026 Bulletin 2026/14**

(21) Application number: **24306566.1**

(22) Date of filing: **25.09.2024**

(51) International Patent Classification (IPC):
*H04N 21/234* (2011.01)   *H04N 21/44* (2011.01)
*H04N 21/81* (2011.01)   *G06T 9/00* (2006.01)

(52) Cooperative Patent Classification (CPC):
**G06T 9/001; A63F 13/00; H04N 21/23412;**
**H04N 21/44012; H04N 21/816**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **GOSSELIN, Philippe Henri**
**35235 THORIGNE-FOUILLARD (FR)**
• **LE CLERC, Francois**
**35590 L'HERMITAGE (FR)**
• **COVA REGATEIRO, João Pedro**
**35220 CHATEAUBOURG (FR)**
• **SRIR, Mohamed Ali**
**35510 CESSON-SEVIGNE (FR)**

(74) Representative: **Vossius & Partner**
**Patentanwälte Rechtsanwälte mbB**
**Siebertstraße 3**
**81675 München (DE)**

(54) **STITCHED GAUSSIAN MIXTURE IN SCENE DESCRIPTION**

(57) Some embodiments of a method may include obtaining information for a three-dimensional (3D) Gaussian model corresponding to an avatar, wherein the information comprises a set of attributes of the 3D Gaussian model; parsing the information for a first attribute of the set of attributes, wherein the first attribute corresponds to an anchor type of the 3D Gaussian model; parsing the information for a second attribute of the set of attributes, wherein the second attribute corresponds to anchor index data of the 3D Gaussian model; and rendering the avatar using the parsed attributes of the 3D Gaussian model.

FIG. 2B

**Description**

**INCORPORATION BY REFERENCE**

The present application incorporates by reference in their entirety the following applications: European Patent Application Serial No. EP24305094, entitled "AVATAR JSON INTERCHANGE FILE FORMAT" and filed January 15, 2024 ("'094 application"); European Patent Application Serial No. EP24306025, entitled "3D GAUSIANS SPLATTING IN SCENE DESCRIPTION" and filed June 26, 2024 ("'025 application"); and European Patent Application Serial No. EP24306469, entitled "AVATAR WITH A GAUSSIAN MIXTURE IN SCENE DESCRIPTION" and filed September 9, 2024 ("'469 application").

**BACKGROUND**

The present application is related to avatars in 3D scene representations.

**SUMMARY**

An example method in accordance with some embodiments may include: obtaining information for a three-dimensional (3D) Gaussian model corresponding to an avatar, wherein the information comprises a set of attributes of the 3D Gaussian model; parsing the information for a first attribute of the set of attributes, wherein the first attribute corresponds to an anchor type of the 3D Gaussian model; parsing the information for a second attribute of the set of attributes, wherein the second attribute corresponds to anchor index data of the 3D Gaussian model; and rendering the avatar using the parsed attributes of the 3D Gaussian model.

For some embodiments of the example method, the anchor type indicates either a vertex or face data type.

For some embodiments of the example method, the anchor index data indicates how to connect the 3D Gaussian model to the avatar.

For some embodiments of the example method, the anchor index data comprises a set of indices corresponding to anchor vertices bound to the 3D Gaussian model.

For some embodiments of the example method, the anchor vertices are bound to 3D Gaussian centers associated with the 3D Gaussian model.

For some embodiments of the example method, the anchor index data comprises a set of indices corresponding to faces bound to the 3D Gaussian model.

For some embodiments of the example method, the faces are bound to anchor locations of 3D Gaussian centers associated with the 3D Gaussian model.

For some embodiments of the example method, the anchor index data further comprises a set of barycentric coordinates for the anchor locations.

For some embodiments of the example method, the anchor index data comprises a set of distances along a normal vector to a mesh associated with the avatar at a reference location.

For some embodiments of the example method, the anchor index data comprises a set of displacements between an anchor location and a location on a mesh associated with the avatar.

For some embodiments of the example method, the information for the 3D Gaussian model comprises a stitched Gaussian mixture data object.

For some embodiments of the example method, the stitched Gaussian mixture data object indicates how a mixture is stitched to a mesh, and the mesh is a mesh associated with the avatar.

For some embodiments of the example method, the information is formatted for a Graphics Library Transmission Format (gITF) structure.

For some embodiments of the example method, the information is formatted for an Avatar JSON Interchange File (AJIF) format structure.

An example apparatus in accordance with some embodiments may include: a processor; and a memory storing instructions operative, when executed by the processor, to cause the apparatus to perform the method of any one of the methods listed above.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1A is a system diagram illustrating an example set of interfaces for a system according to some embodiments.

FIG. 1B is a system diagram illustrating an example set of interfaces for a scene description (stored as an item in gITF.json), three video tracks, an audio track, and a JSON patch update track in an ISOBMFF file according to some embodiments.

FIG. 1C is a system diagram illustrating an example set of interfaces for an MPEG-I node hierarchy supporting elements of scene interactivity according to some embodiments.

FIG. 1D is a schematic plan view illustrating example relationships of extended reality scene description objects according to some embodiments.

FIG. 2A is a schematic illustration showing an example avatar subset model with vertices according to some embodiments.

FIG. 2B is a flowchart illustrating an example process for processing an avatar subset model with vertices according to some embodiments.

FIG. 3A is a schematic illustration showing an example avatar subset model with faces according to some embodiments.

FIG. 3B is a flowchart illustrating an example process for processing an avatar subset model with faces according to some embodiments.

FIG. 4 is a flowchart illustrating an example process for parsing 3D Gaussian model associated with an avatar according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

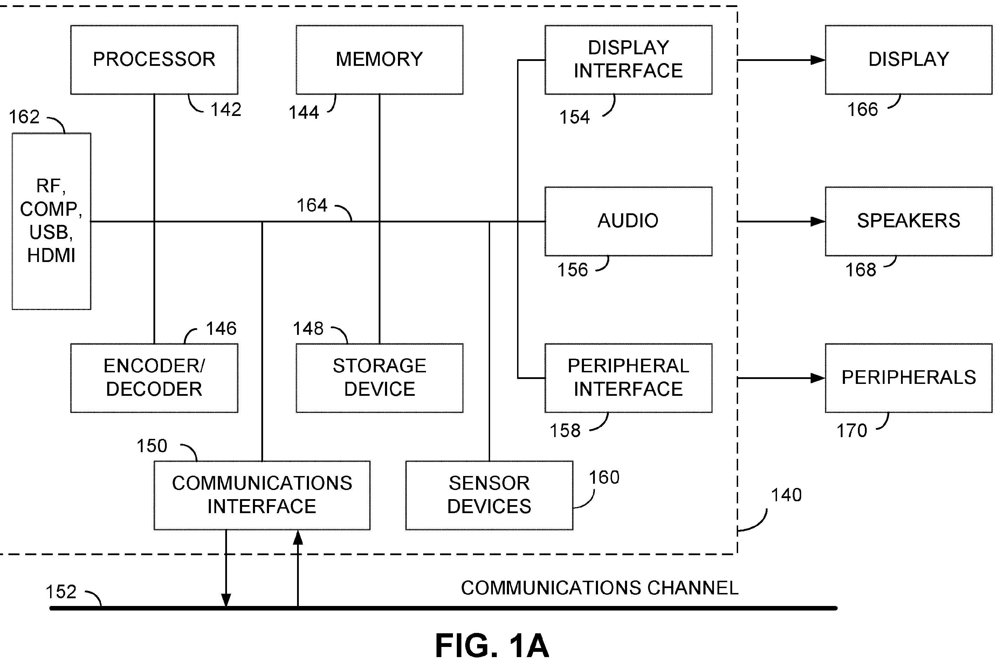

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

**Scene Description Framework for XR**

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

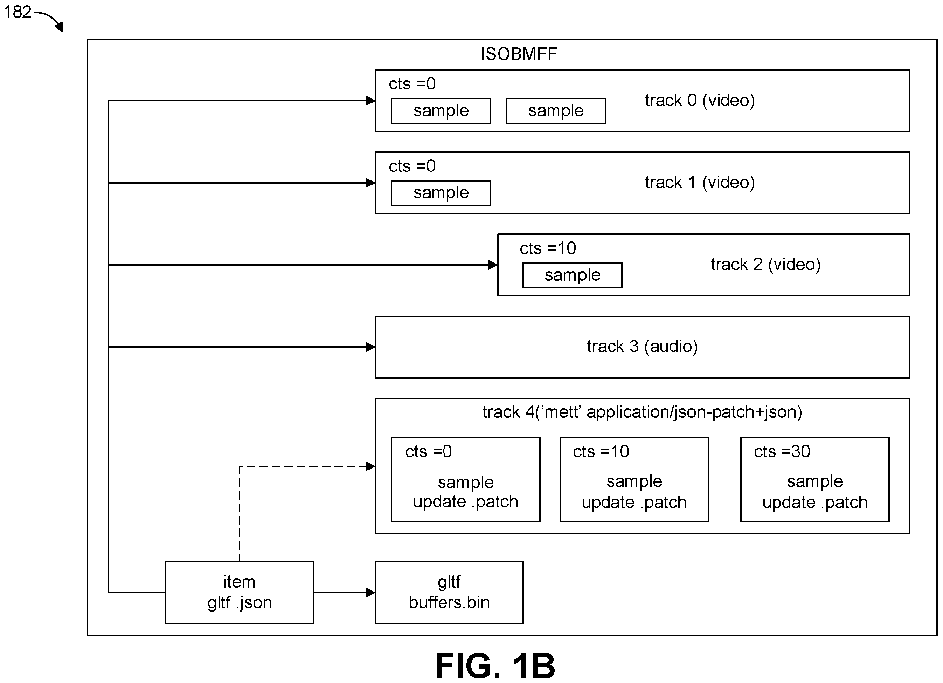

FIG. 1 B is a system diagram illustrating an example set of interfaces for a scene description (stored as an item in glTF.json), three video tracks, an audio track, and a JSON patch update track in an ISOBMFF file 182 according to some embodiments.

**Runtime Interactivity**

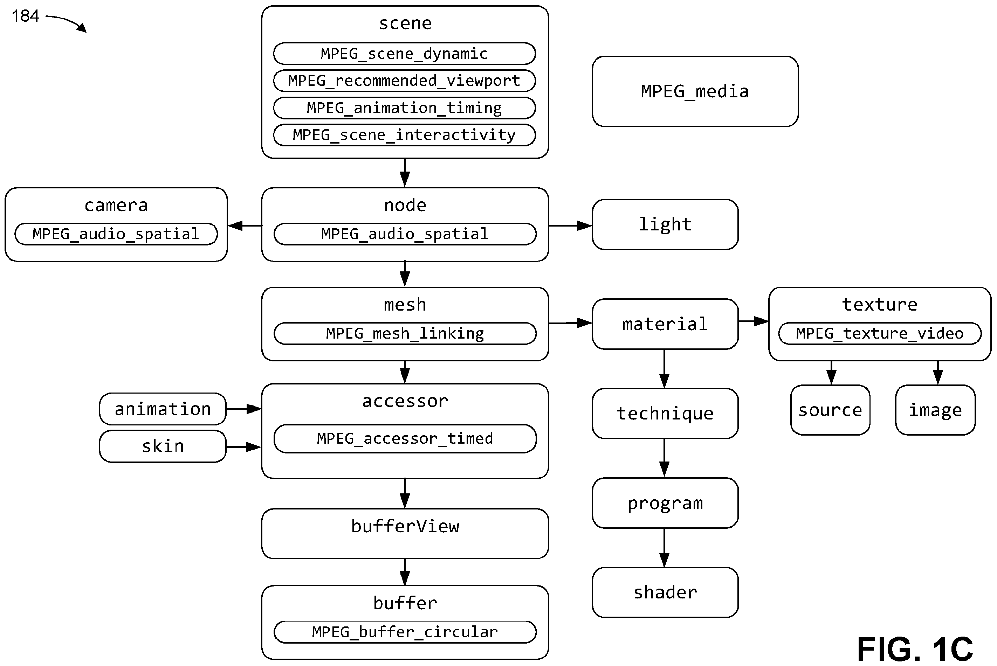

FIG. 1C is a system diagram illustrating an example set of interfaces for an MPEG-I node hierarchy 184 supporting elements of scene interactivity according to some embodiments.

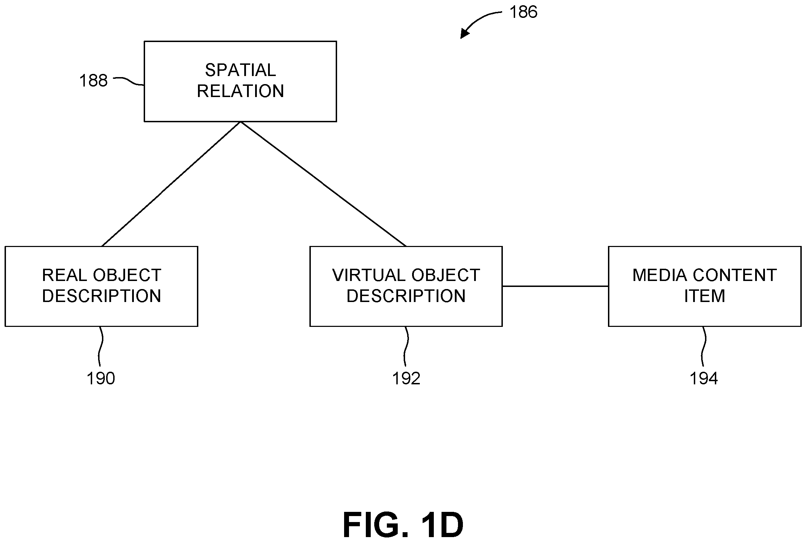

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the gITF scene description is extended to support interactivity. The interactivity extension applies at the gITF scene level and is called MPEG_scene_interactivity. See the document ISO/IEC 23090-14, *CDAM 2: Support for Haptics, Augmented Reality, Avatars, Interactivity,* MPEG-I *Audio, and Lighting,* ISO/IEC JTC 1/SC 29/WG 03 N00797 *("MPEG Extension").*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / gITF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

The domain of the application is the encoding of an avatar using a stitched Gaussian mixture in 3D scene representations. Stitched Gaussian mixtures are bound to a mesh, allowing an automatic update of some of their parameters when the mesh is deformed.

The current MPEG-I Scene Description (SD) format using the MPEG_node_avatar extension allows for the definition of an avatar model. Thanks to these features, applications may know which mesh is an avatar, and use the mesh with an avatar. For instance, if the avatar is a usual human body mesh, an application may place the avatar in a scene and let the user move the avatar in the world. Furthermore, the AJIF format introduced in the '094 application also may encode an avatar model.

**Problem Statement**

The context is one of avatar interoperability, where a user possesses or has access to an avatar encoded into one or more files (preferably gITF or AJIF). The avatar files contain the information that an application uses to implement the expected features. The application is not expected to provide extra data or make choices about possible setups. For some embodiments, the avatar files contain all of the information that an application needs to implement the expected features.

This application relates to the modeling of a 3D scene using a collection of 3D Gaussians, each with an opacity and a possibly viewpoint-dependent color. A 3D Gaussian model allows the synthesis of novel views of a scene given a set of image rendering of the scene obtained from several calibrated viewpoints. The novel views are synthesized from viewpoints that in general differ from the initially-provided viewpoints.

The color of a pixel in a synthesized view is computed by casting a ray from the center of a virtual camera defining the view to the considered pixel. The opacities and colors of the Gaussians that are traversed by the ray are accumulated following a differentiable volume rendering or "splatting" scheme to produce the color of the pixel. The formulation of the 3D Gaussian is as shown in Eq. 1:

$$G(x) = e^{-\frac{1}{2}(x)^T \Sigma_{\square}^{-1} x} \qquad (1)$$

where $\Sigma$ defines a 3D covariance matrix in the world space centered at point mean $\mu$ and

$$\Sigma_{\square}^{-1}$$

is an inverted 3D covariance matrix, which is expressed below in Eq. 2 for some embodiments.

To allow the synthesis of novel views, in a first stage, the geometrical, color, and opacity parameters of the Gaussians are computed from the input views and the known corresponding viewpoints. The computation is based on an optimization process that ensures that the ground truth pixel colors in the input views match the colors synthesized by the model using the Gaussian parameter values. Eq. 2 covers situation in which a 3D Gaussian is transformed into a 2D

Gaussian ("spalts"):

$$\Sigma' = JW\Sigma W^T J^T \qquad (2)$$

where J is the Jacobian of the affine projection transform. W is a camera view transformation matrix, and $W^T$ is transposed version of *W.*

The 3D covariance matrix $\Sigma$ is formulated as shown in Eq. 3:

$$\Sigma = RSS^T R^T \qquad (3)$$

where *S* is a scaling matrix, and R is a rotation matrix.

In general, the positions and orientations of the Gaussians in 3D space are not tied to the surfaces of the objects making up the 3D scene. Indeed, these geometrical parameters are optimized with respect to a purely photometric criterion, namely, matching the colors of the pixels in the input views after converting the Gaussians into 2D splats and not with respect to the geometry of the 3D scene. In the special case where a 3D scene is a human body or a human face, an extra desirable feature of the model is that the model is easily animatable.

3D Gaussian Splatting models of human beings may provide high-quality representations of avatars in immersive 3D virtual environment platforms where each user is represented by an avatar. For the sake of interoperability, a description of the 3D Gaussian splatting model of an avatar needs to be exchanged between platforms over a network. The present application seeks to provide such a description.

Two embodiments are presented below: one with AJIF, and the other with gITF. Other embodiments are possible with other scene description formats (like USD and FBX, among other formats).

Signaling with AJIF

The AJIF format was introduced in the '094 application.

Geometry Extension

A *Geometry* structure defines a mesh with associated properties. Table 1 shows the properties of the Geometry structure with a new "stitched Gaussians" property.

A 3D Gaussian splatting is a primitive that represents the volume of a 3D space using a normal distribution. This normal distribution is flattened and encapsulated into an ellipsoid shape to allow rasterization techniques.

Meshes are 3D geometrical representations that contain a collection of 3D vertices and a topology that connects the vertices to form a surface. Meshes are considered explicit representations and have no color information.

Mixtures are a combination of meshes and Gaussian splats. Mixtures enable the integration of color onto the mesh through 2D image rasterization techniques.

**Table 1.**

| Name | Type | Req. | Description |
|------|------|------|-------------|
| name | string | No | Geometry name. |
| vertices | integer | Yes | References an item in the "data" collection. The referenced item must be a float tensor [number of vertices, 3]. |
| normals | integer | No | References an item in the "data" collection. The referenced item must be a float tensor [number of vertices, 3]. |
| uvs | integer[1-*] | No | List of references to an item the "data" collection. The ith referenced item must be a float tensor [number of uvs(i), 2]. |
| faces | Faces | No | A *Faces* object. |
| blendshapes | Blendshape[1-*] | No | List of *Blendshape objects.* |
| textures | Texture[1-*] | No | List of *Texture objects.* |
| stitchedGM | StitchedGM[1-*] | No | List of *StitchedGM objects.* |

**Signaling with glTF**

In the current application, the format may follow the glTF format and is compatible with the recent MPEG-I SD standard.

**MPEG_primitive_stitchedgm**

A new extension, "MPEG_primitive_stitchedgm," is introduced, which extends a mesh primitive. See Table 2.

**Table 2.**

| Name | Type | Required | Description |
|------|------|----------|-------------|
| stitchedGM | StitchedGM[1-*] | Yes | List of *StitchedGM objects.* |

**Generic Properties**

The properties shown in the tables below are not specific to AJIF or glTF and may be used in other formats.

StitchedGM

*StitchedGM* (Stitched Gaussian Mixture) properties are shown in Table 3.

**Table 3.**

| Name | Type | Required | Description |
|------|------|----------|-------------|
| name | string | No | The name of this mixture. |
| description | string | No | Describe the mixture. |
| type | string | Yes | The type of mixture, for instance "center" or "aligned". |
| purpose | string | Yes | The purpose of the mixture. |
| anchors | AnchorSet[1-*] | Yes | List of *AnchorSet*. |
| normals | integer | No | References an item in the *"data"* or "accessors" collection with the Gaussian normals. The referenced item must be a float tensor [number of gaussians, 3]. |
| colors | integer | No | References an item in the *"data"* or "accessors" collection with the Gaussian colors. The referenced item must be a float tensor [number of gaussians, 3]. Cannot be present if "sphericalHarmonics" is present. |
| spherical Harmonics | SphericalHarmonic[1-*] | No | List of *SphericalHarmonic*. Cannot be present if "colors" is present. |
| alphas | integer | No | References an item in the *"data"* or "accessors" collection with the Gaussian opacities. The referenced item must be a float tensor [number of gaussians]. |
| rotations | integer | No | References an item in the *"data"* or "accessors" collection with the rotations (quaternions). The referenced item must be a float tensor [number of gaussians, 4]. |
| scales | integer | No | References an item in the *"data"* or "accessors" collection with the scales. The referenced item must be a float tensor [number of gaussians, 3]. |

The "name" property defines the name of the mixture and may be used for indexing, e.g., to retrieve the name of the mixture.
The "description" property describes the mixture. For instance, a description may be used in user interfaces to help the user understand which mixture is being used.

The "type" property defines the type of mixture and how the mixture is stitched to the mesh, especially how the mixture changes and/or which portion of the mixture(s) change(s). For example, if the "type" property is "center", then only the center of the Gaussians change when the vertices of the mesh move. If the "type" property is "aligned", then the center changes and the orientation of the Gaussians change to align with the face on which the Gaussians are stitched (only works if anchors use faces).

The "purpose" property defines the purpose of the mixture. These "purpose" properties may be defined by an application or a standard, for instance. For example, a universal resource name, such as "urn:mpeg:avatar:finedetails:hair", may be used to indicate that these mixtures improve the representation and rendering of hair.

The "alphas" property defines the opacities of the Gaussians.

The "rotations" and "scales" properties together define the covariance matrices of the Gaussians in the 3D coordinate frame in which the scene is represented. The covariance matrix $\Sigma_i$ of the 3D Gaussian indexed by i is decomposed as shown in Eq. 4:

$$\Sigma_i = R_i S_i S_i^T R_i^T \qquad\qquad (4)$$

In some embodiments, the "rotations" and "scales" properties are replaced by a single "covariances" property that defines the covariance matrices of the Gaussians.

In some cases, the 3D Gaussians may be flattened into one or more 2D representations. The "normals" property in these cases specifies the orientation of the Gaussian relative to the normal vector of the plane with which the Gaussian is aligned.

The "anchors" property specifies the anchor positions of the centers of the 3D Gaussians with respect to the vertices and faces of the avatar mesh. This property is described below.

**AnchorSet**

AnchorSet contains the properties shown in Table 4.

**Table 4.**

| Name | Type | Required | Description |
|---|---|---|---|
| type | string | Yes | The type of anchors, for instance "vertex" or "face". |
| purpose | string | Yes | The purpose of the fine details. |
| distances | integer | No | References an item in the *"data"* or "accessors" collection with the distances to the anchor points. |
| displacements | integer | No | References an item in the *"data"* or "accessors" collection with 3D displacements vectors to the anchor point. |
| If type is "vertex" { | | | |
| indices | integer | No | References an item in the *"data"* or "accessors" collection with the indices of the anchor vertices to which the 3D Gaussian centers are bound. |
| } | | | |
| If type is "face" { | | | |
| indices | integer | No | References an item in the *"data"* or "accessors" collection with the indices of the faces on which the anchor locations of the 3D Gaussian centers are located. |
| weights | integer | No | References an item in the *"data"* or "accessors" collection with barycentric coordinates of the anchor points to which the 3D Gaussian centers are tied, inside the mesh face specified by the "indices" property. |
| } | | | |

The *AnchorSet* type defines the 3D locations, referenced with respect to the surface of the avatar mesh, to which the centers of the 3D Gaussians in the Gaussian Splatting model are bound. These locations may be defined by a reference location on the surface of the mesh and a displacement from this reference location.

Depending on the "type" property, the locations on the surface of the mesh are defined with respect to the locations of reference vertices or with respect to the points on the surface of the mesh faces. In the former case, the "type" property is set to "vertex", and the "indices" property specifies the index of the reference vertex for each of the Gaussians. In the latter case, the "type" property is set to "face" and the referenced location on the mesh surface is defined by the "indices" and "weights" properties. For each Gaussian, the corresponding value in the "indices" property specifies the index of the face in the mesh, and the "weights" property specifies the values of the barycentric coordinates defining the location of the reference point on the surface of this face.

The "distances" and "displacements" properties allow for specification of anchor locations away from the surface of the mesh. The "displacements" value associated with each Gaussian is a 3D vector representing the displacement of its anchor point with respect to the above specified reference location on the mesh surface. For each Gaussian, the "distances" value represents the distance along the outward normal vector to the mesh at the reference location. When a reference location refers to a vertex, the normal vector may be defined, for instance, as an average of the normals of all faces for which the vertex belongs.

**Spherical Harmonics**

As shown in Table 5, the *SphericalHarmonic* structure type defines the degree and weights parameters of a spherical harmonic. See the '469 application.

**Table 5.**

| Name | Type | Required | Description |
|---|---|---|---|
| degree | integer | Yes | Degree of the spherical harmonic. |
| weights | integer | Yes | References an item in the *"data"* or "accessors" collection with the spherical harmonic weights. The referenced item must be a float tensor [number of points, 2*degree+1, 3]. |

The "degree" property defines the degree of the spherical harmonic.

The "weights" property defines the weights for the spherical harmonic of degree "degree". There is a weight value for each color (red, green, and blue). For each color, the number of weights depends on the degree of the spherical harmonic.

A *SphericalHarmonic* structure signals only one degree for a spherical harmonic. Previous degrees are not signaled in a *SphericalHarmonic* structure. To signal a spherical harmonic model made of all spherical harmonics up to a given degree, one or more *SphericalHarmonic* instances are required. The first *SphericalHarmonic* instance signals the spherical harmonic of degree 0 (its "degree" property is 0). The second *SphericalHarmonic* instance signals the spherical harmonic of degree 1 (its "degree" property is 1) and so on.

**AJIF Example**

An avatar may be encoded using the AJIF format, as shown in Code Listing 1.

**Code Listing 1.**

```
{
    "asset": {
        "version": "1.0",
        "copyright": "Interdigital R&D"
    },
    "data": [...],
    "geometries": [
        {
            "vertices": 0,
            "faces": {
                "vertices": 1
            },
            "stitchedGaussianMixtures": [
                {
                    "anchors": {
                        "type": "face",
                        "indices": 2,
                        "weights": 3
                    },
                    "rotations": 4,
                    "scales": 5,
                    "alphas": 6,
                    "sphericalHarmonics": [
                        {
                            "degree": 0,
                            "weights": 7
                        },
                        {
                            "degree": 1,
                            "weights": 8
                        },
                        {
                            "degree": 2,
                            "weights": 9
                        }
                    ]
                }
            ]
        }
    ],
    "nodes": [
        {
            "geometry": 0
        }
    ],
    "lods": [
        {
            "name": "main",
            "lod": 0,
            "mesh": 0
        }
    ]
}
```

All content is parsed as defined in the '094 application, except for the "geometries" root properties. The description below regards the example code listing shown in Code Listing 1.

When parsing the "geometries" property, only one geometry element is found. The "vertices" and "faces" properties define a mesh with vertices and faces. When parsing the "stitchedGaussianMixtures" property, a single mixture element is found. The "anchors" property defines an anchor based on points on the mesh because the "type" property is equal to "face". The points are defined by the face indices available via index 2 of the data accessor ("indices" is 2). The barycenter weights are available via index 3 of the data accessor ("weights" is 3). These anchors are used to set the center of each Gaussian in the mixture. Since these anchors are not coordinates but points on the surface of a mesh, the Gaussian centers are updated if the vertices of the mesh change. For some embodiments, these updates happen when any of the vertices of the mesh change. The rotations of each Gaussian are available via index 4 of the data accessor ("rotations" is 4). The scales of each Gaussian are available via index 5 of the data accessor ("scales" is 5), The opacity of each Gaussian is available via index 6 of the data accessor ("alphas" is 6). The "sphericalHarmonics" property defines spherical harmonics for three degrees: degree 0, degree 1, and degree 2. The weights for each degree are available via indices 7, 8, and 9 of the data accessor.

**gITF Example**

An avatar may be encoded using the gITF format, as shown in Code Listing 2.

**Code Listing 2.**

```
{
    "asset": {
        "generator": "Interdigital R&D France, Video Lab, MetaVideo,
Interactive Media, Immersive telepresence",
        "version": "2.0"
    },
    "extensionsUsed": ["MPEG_primitive_stitchedgm"],
    "accessors": [...],
    "bufferViews": [...],
    "buffers": [...],
    "meshes": [
        {
            "primitives": [
                {
                    "attributes": {
                        "POSITION": 0
                    }
                }
            ],
            "indices": 1,
            "extensions": {
                "MPEG_primitive_stitchedgm": {
                    "stitchedGMs": [
                        {
                            "anchors": {
                                "type": "face",
                                "indices": 2,
                                "weights": 3
                            },
                            "rotations": 4,
                            "scales": 5,
                            "alphas": 6,
                            "sphericalHarmonics": [
                                {
                                    "degree": 0,
                                    "weights": 7
                                },
                                {
                                    "degree": 1,
                                    "weights": 8
                                },
                                {
                                    "degree": 2,
                                    "weights": 9
                                }
                            ]
                        }
                    ]
                }
            }
        }
    ],
    "nodes": [
        {
            "mesh": 0
        }
    ],
    "scene": 0,
    "scenes": [
        {
            "nodes": [0]
        }
    ]
}
```

All content is parsed as defined in the gITF 2.0 specification (available at: registry<dot>khronos<dot>org/gITF/-

specs/2.0/gITF-2.0.pdf), except for the "meshes" root properties. The description below is with regard to the example code listing shown in Code Listing 2.

When parsing the "meshes" property, only one mesh element is found. This element has a single primitive. The "POSITION" key of the "attributes" property defines a mesh with vertices and faces. When parsing the "MPEG_primitive_stitchedgm" extension, a single mixture element is found. The "anchors" property defines an anchor based on points on the mesh because the "type" property is equal to "face". The points are defined by the face indices available via index 2 of the data accessor ("indices" is 2). The barycenter weights are available via index 3 of the data accessor ("weights" is 3). These anchors are used to set the center of each Gaussian in the mixture. Since these anchors are not coordinates but points on the surface of a mesh, the Gaussian centers are updated if the vertices of the mesh change. For some embodiments, these updates happen when any of the vertices of the mesh change. The rotations of each Gaussian are available via index 4 of the data accessor ("rotations" is 4). The scales of each Gaussian are available via index 5 of the data accessor ("scales" is 5), The opacity of each Gaussian is available via index 6 of the data accessor ("alphas" is 6). The "sphericalHarmonics" property defines spherical harmonics for three degrees: degree 0, degree 1, and degree 2. The weights for each degree are available via indices 7, 8, and 9 of the data accessor.

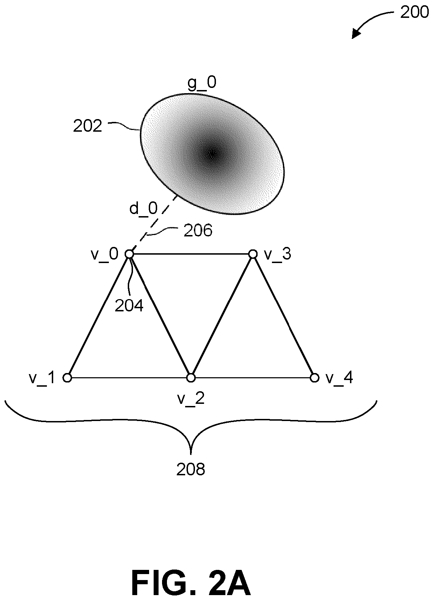

FIG. 2A is a schematic illustration showing an example avatar subset model with vertices according to some embodiments. The example model 200 shows a Gaussian splatting 202 that represents the volume of a 3D space using a normal distribution. This normal distribution is flattened and encapsulated into an ellipsoid shape 202 to allow rasterization techniques. The example model 200 also shows a mesh 208 that contains a collection of (3D) vertices 204 and a topology that connects the vertices to form a surface. For the example model 200, the example vertices shown are $v\_0$, $v\_1$, $v\_2$, $v\_3$, and $v\_4$. The example model 200 also shows an example displacement vector $d\_0$ (206) between vertex $v\_0$ (204) and a Gaussian center $g\_0$ of the Gaussian splatting 302.

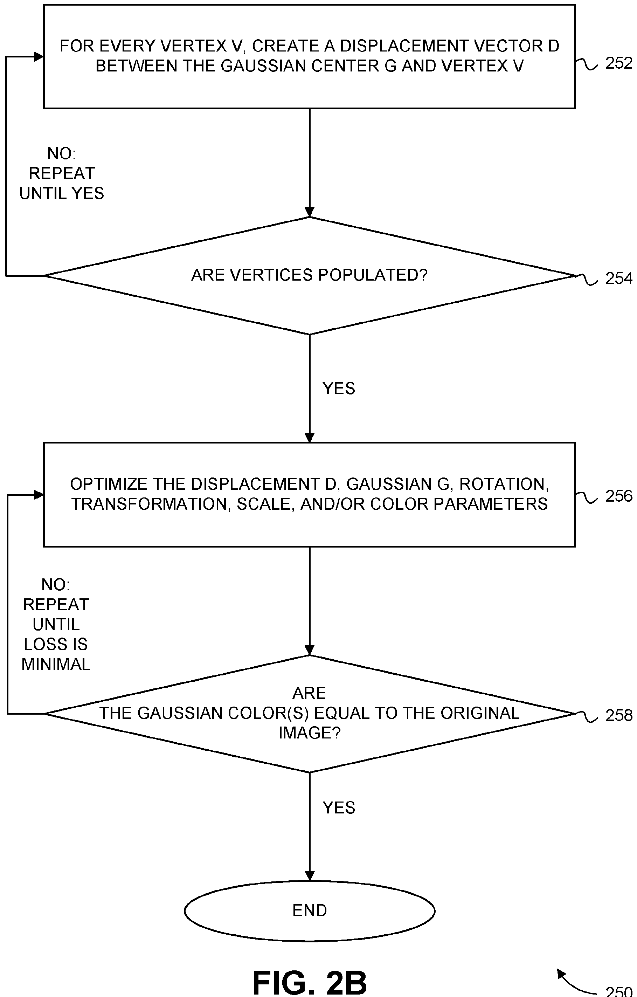

FIG. 2B is a flowchart illustrating an example process for processing an avatar subset model with vertices according to some embodiments. An example handling process 250 performs a loop such that for every vertex v, the process creates 252 a displacement vector d between the Gaussian center g and the vertex v. The loop determines 254 if the vertices are populated. For some embodiments, the loop determines if all of the vertices are populated. If the answer is no, the loop continues. If the answer is yes, the process 250 optimizes 256 the displacement d, Gaussian g, rotation, transformation, scale, and/or color parameters. The process 250 determines 258 if the Gaussian color(s) are equal to the ones in the original image. For some embodiments, the process 250 determines if one or more of the parameters (displacement d, Gaussian g, rotation, transformation, scale, and/or color) are minimized. If no, the process 250 returns to optimizing 256 the displacement d, Gaussian g, rotation, transformation, scale, and/or color parameters. If the answer is yes (or differences are minimized for some embodiments), then the process 250 exits.

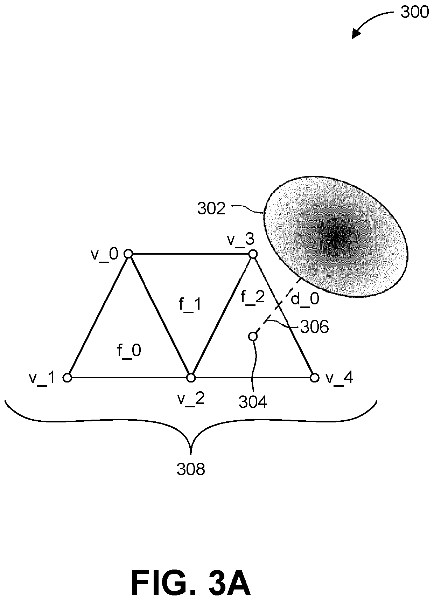

FIG. 3A is a schematic illustration showing an example avatar subset model with faces according to some embodiments. The example model 300 shows a Gaussian splatting 302 that represents the volume of a 3D space using a normal distribution. This normal distribution is flattened and encapsulated into an ellipsoid shape 302 to allow rasterization techniques. The example model 300 also shows a mesh 308 that contains a collection of (3D) vertices and a topology that connects the vertices to form a surface. For the example model 300, the example vertices shown are $v\_0$, $v\_1$, $v\_2$, $v\_3$, and $v\_4$. Furthermore, the example model 300 shows a set of faces $f\_0$, $f\_1$, and $f\_2$. The example model 300 also shows an example displacement vector $d\_0$ (306) between the Barycentric coordinate of face $f\_2$ (304) and a Gaussian center of the Gaussian splatting 302.

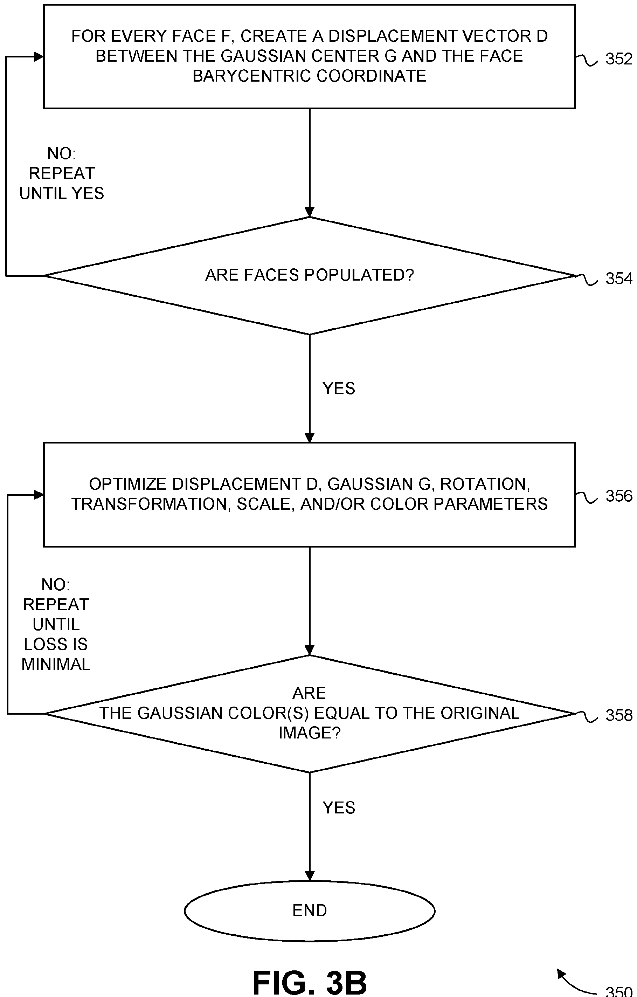

FIG. 3B is a flowchart illustrating an example process for processing an avatar subset model with faces according to some embodiments. An example handling process 350 performs a loop such that for every face f, the process creates 352 a displacement vector d between the Gaussian center g and the barycentric coordinate of the face. The loop determines 354 if the faces are populated. For some embodiments, the loop determines if all of the faces are populated. If the answer is no, the loop continues. If the answer is yes, the process 350 optimizes 356 the displacement d, Gaussian g, rotation, transformation, scale, and/or color parameters. The process 350 determines 358 if the Gaussian color(s) are equal to the ones in the original image. For some embodiments, the process 350 determines if one or more of the parameters (displacement d, Gaussian g, rotation, transformation, scale, and/or color) are minimized. If no, the process 350 returns to optimizing 356 the displacement d, Gaussian g, rotation, transformation, scale, and/or color parameters. If the answer is yes (or differences are minimized for some embodiments), then the process 350 exits.

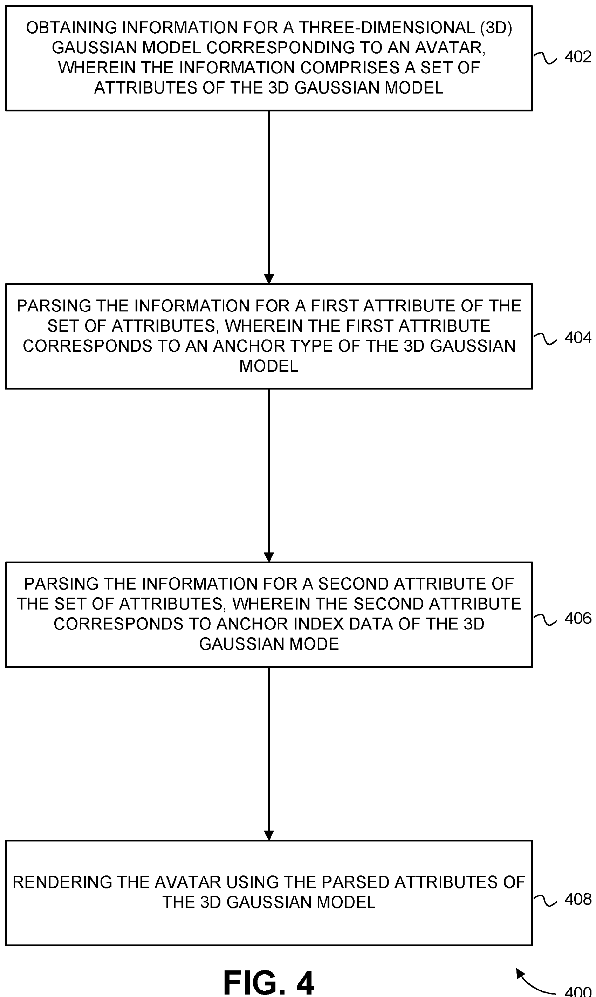

FIG. 4 is a flowchart illustrating an example process for parsing 3D Gaussian model associated with an avatar according to some embodiments. For some embodiments, an example process 400 may include obtaining 402 information for a three-dimensional (3D) Gaussian model corresponding to an avatar, wherein the information comprises a set of attributes of the 3D Gaussian model. For some embodiments, the example process 400 may further include parsing 404 the information for a first attribute of the set of attributes, wherein the first attribute corresponds to an anchor type of the 3D Gaussian model. For some embodiments, the example process 400 may further include parsing 406 the information for a second attribute of the set of attributes, wherein the second attribute corresponds to anchor index data of the 3D Gaussian model. For some embodiments, the example process 400 may further include rendering 408 the avatar using the parsed attributes of the 3D Gaussian model.

A first example method in accordance with some embodiments may include populating a model of an avatar in which each vertex of a plurality of vertices of a mesh is connected to a Gaussian center of a plurality of Gaussian centers by a respective displacement vector of a plurality of displacement vectors. The example method may further include an optimization process for optimizing one or more associated parameters to minimize the Gaussian colors of an original image corresponding to the avatar, wherein the associated parameters include at least one of the plurality of displacement vectors, the plurality of Gaussian centers, a plurality of rotation values, a plurality of transformation values, and a plurality of color values.

A second example method in accordance with some embodiments may include populating a model of an avatar in which each face of a plurality of faces is connected to a Gaussian center of a plurality of Gaussian centers by a respective displacement vector of a plurality of displacement vectors. The example method may further include an optimization process for optimizing one or more associated parameters to minimize the Gaussian colors of an original image corresponding to the avatar, wherein the associated parameters include at least one of the plurality of displacement vectors, the plurality of Gaussian centers, a plurality of rotation values, a plurality of transformation values, and a plurality of color values. For some embodiments, each displacement vector of the plurality of displacement vectors connects the respective Gaussian center of the plurality of Gaussian centers to a respective Barycentric coordinate associated with the respective face.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information for a three-dimensional (3D) Gaussian model corresponding to an avatar, wherein the information comprises a set of attributes of the 3D Gaussian model; parsing the information for a first attribute of the set of attributes, wherein the first attribute corresponds to an anchor type of the 3D Gaussian model; parsing the information for a second attribute of the set of attributes, wherein the second attribute corresponds to anchor index data of the 3D Gaussian model; and rendering the avatar using the parsed attributes of the 3D Gaussian model.

For some embodiments of the example method, the anchor type indicates either a vertex or face data type.

For some embodiments of the example method, the anchor index data indicates how to connect the 3D Gaussian model to the avatar.

For some embodiments of the example method, the anchor index data comprises a set of indices corresponding to anchor vertices bound to the 3D Gaussian model.

For some embodiments of the example method, the anchor vertices are bound to 3D Gaussian centers associated with the 3D Gaussian model.

For some embodiments of the example method, the anchor index data comprises a set of indices corresponding to faces bound to the 3D Gaussian model.

For some embodiments of the example method, the faces are bound to anchor locations of 3D Gaussian centers associated with the 3D Gaussian model.

For some embodiments of the example method, the anchor index data further comprises a set of barycentric coordinates for the anchor locations.

For some embodiments of the example method, the anchor index data comprises a set of distances along a normal vector to a mesh associated with the avatar at a reference location.

For some embodiments of the example method, the anchor index data comprises a set of displacements between an anchor location and a location on a mesh associated with the avatar.

For some embodiments of the example method, the information for the 3D Gaussian model comprises a stitched Gaussian mixture data object.

For some embodiments of the example method, the stitched Gaussian mixture data object indicates how a mixture is stitched to a mesh, and the mesh is a mesh associated with the avatar.

For some embodiments of the example method, the information is formatted for a Graphics Library Transmission Format (glTF) structure.

For some embodiments of the example method, the information is formatted for an Avatar JSON Interchange File (AJIF) format structure.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining information for a three-dimensional (3D) Gaussian model corresponding to an avatar, wherein the information comprises a set of attributes of the 3D Gaussian model;
   parsing the information for a first attribute of the set of attributes, wherein the first attribute corresponds to an anchor type of the 3D Gaussian model;
   parsing the information for a second attribute of the set of attributes, wherein the second attribute corresponds to anchor index data of the 3D Gaussian model; and
   rendering the avatar using the parsed attributes of the 3D Gaussian model.

2. The method of claim 1, wherein the anchor type indicates either a vertex or face data type.

3. The method of any one of claims 1-2, wherein the anchor index data indicates how to connect the 3D Gaussian model to the avatar.

4. The method of any one of claims 1-3, wherein the anchor index data comprises a set of indices corresponding to anchor vertices bound to the 3D Gaussian model.

5. The method of claim 4, wherein the anchor vertices are bound to 3D Gaussian centers associated with the 3D Gaussian model.

6. The method of any one of claims 1-3, wherein the anchor index data comprises a set of indices corresponding to faces bound to the 3D Gaussian model.

7. The method of claim 6, wherein the faces are bound to anchor locations of 3D Gaussian centers associated with the 3D Gaussian model.

8. The method of claim 7, wherein the anchor index data further comprises a set of barycentric coordinates for the anchor locations.

9. The method of any one of claims 1-8, wherein the anchor index data comprises a set of distances along a normal vector to a mesh associated with the avatar at a reference location.

10. The method of any one of claims 1-9, wherein the anchor index data comprises a set of displacements between an anchor location and a location on a mesh associated with the avatar.

11. The method of any one of claims 1-10, wherein the information for the 3D Gaussian model comprises a stitched Gaussian mixture data object.

12. The method of claim 11,

    wherein the stitched Gaussian mixture data object indicates how a mixture is stitched to a mesh, and wherein the mesh is a mesh associated with the avatar.

13. The method of any one of claims 1-12, wherein the information is formatted for a Graphics Library Transmission Format (glTF) structure.

14. The method of any one of claims 1-12, wherein the information is formatted for an Avatar JSON Interchange File (AJIF) format structure.

15. An apparatus comprising:

a processor; and

a memory storing instructions operative, when executed by the processor, to cause the apparatus to perform the method of any one of claims 1 through 14.

FIG. 1A

**FIG. 1B**

184

scene
- MPEG_scene_dynamic
- MPEG_recommended_viewport
- MPEG_animation_timing
- MPEG_scene_interactivity

MPEG_media

node
- MPEG_audio_spatial

camera
- MPEG_audio_spatial

light

mesh
- MPEG_mesh_linking

material

texture
- MPEG_texture_video

image

source

technique

program

shader

accessor
- MPEG_accessor_timed

animation

skin

bufferView

buffer
- MPEG_buffer_circular

**FIG. 1C**

**FIG. 1D**

EP 4 718 852 A1

**FIG. 2A**

FOR EVERY VERTEX V, CREATE A DISPLACEMENT VECTOR D BETWEEN THE GAUSSIAN CENTER G AND VERTEX V — 252

NO: REPEAT UNTIL YES

ARE VERTICES POPULATED? — 254

YES

OPTIMIZE THE DISPLACEMENT D, GAUSSIAN G, ROTATION, TRANSFORMATION, SCALE, AND/OR COLOR PARAMETERS — 256

NO: REPEAT UNTIL LOSS IS MINIMAL

ARE THE GAUSSIAN COLOR(S) EQUAL TO THE ORIGINAL IMAGE? — 258

YES

END

**FIG. 2B**

— 250

FIG. 3A

FOR EVERY FACE F, CREATE A DISPLACEMENT VECTOR D BETWEEN THE GAUSSIAN CENTER G AND THE FACE BARYCENTRIC COORDINATE ～ 352

NO:
REPEAT
UNTIL YES

ARE FACES POPULATED? ～ 354

YES

OPTIMIZE DISPLACEMENT D, GAUSSIAN G, ROTATION, TRANSFORMATION, SCALE, AND/OR COLOR PARAMETERS ～ 356

NO:
REPEAT
UNTIL
LOSS IS
MINIMAL

ARE
THE GAUSSIAN COLOR(S) EQUAL TO THE ORIGINAL IMAGE? ～ 358

YES

END

# FIG. 3B

～ 350

OBTAINING INFORMATION FOR A THREE-DIMENSIONAL (3D) GAUSSIAN MODEL CORRESPONDING TO AN AVATAR, WHEREIN THE INFORMATION COMPRISES A SET OF ATTRIBUTES OF THE 3D GAUSSIAN MODEL  402

PARSING THE INFORMATION FOR A FIRST ATTRIBUTE OF THE SET OF ATTRIBUTES, WHEREIN THE FIRST ATTRIBUTE CORRESPONDS TO AN ANCHOR TYPE OF THE 3D GAUSSIAN MODEL  404

PARSING THE INFORMATION FOR A SECOND ATTRIBUTE OF THE SET OF ATTRIBUTES, WHEREIN THE SECOND ATTRIBUTE CORRESPONDS TO ANCHOR INDEX DATA OF THE 3D GAUSSIAN MODE  406

RENDERING THE AVATAR USING THE PARSED ATTRIBUTES OF THE 3D GAUSSIAN MODEL  408

# FIG. 4

400

**EUROPEAN SEARCH REPORT**

**Application Number**

EP 24 30 6566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHIJING SHAO ET AL: "SplattingAvatar: Realistic Real-Time Human Avatars with Mesh-Embedded Gaussian Splatting", ARXIV.ORG, CORNELL UNIVERSITY LIBRARY, 201 OLIN LIBRARY CORNELL UNIVERSITY ITHACA, NY 14853, 8 March 2024 (2024-03-08), XP091695233, | 1-3, 6-12,15 | INV. H04N21/234 H04N21/44 H04N21/81 G06T9/00 |
| Y | * page 3, column 2 - page 6, column 1; figures 2, 3, 4, 5 * | 13,14 | |
| | ----- | | |
| X | Waczynska Joanna ET AL: "GaMeS: Mesh-Based Adapting and Modification of Gaussian Splatting", arXiv, 2 February 2024 (2024-02-02), pages 1-13, XP093235200, Retrieved from the Internet: URL:https://arxiv.org/pdf/2402.01459v1 [retrieved on 2024-02-02] | 1-5,15 | |
| A | * page 3, column 1 - page 5, column 2 * | 6-14 | |
| | ----- | | **TECHNICAL FIELDS SEARCHED (IPC)** |
| Y | "Information technology - Runtime 3D asset delivery format - Khronos glTF(TM) 2.0", ISO/IEC 12113:2022, IEC, 3, RUE DE VAREMBÉ, PO BOX 131, CH-1211 GENEVA 20, SWITZERLAND , 26 July 2022 (2022-07-26), pages 1-189, XP082045317, Retrieved from the Internet: URL:https://api.iec.ch/harmonized/publicat ions/download/3038945 [retrieved on 2022-07-26] * page 61 - page 62 * | 13 | H04N G06T |
| | ----- | | |
| | -/-- | | |

The present search report has been drawn up for all claims

| Place of search | Date of completion of the search | Examiner |
|---|---|---|
| Munich | 18 December 2024 | Morawski, Igor |

EPO FORM 1503 03.82 (P04C01)

Europäisches
Patentamt

European
Patent Office

Office européen
des brevets

**EUROPEAN SEARCH REPORT**

Application Number

EP 24 30 6566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JOAO REGATEIRO (INTERDIGITAL) ET AL: "[42.2][SD] Avatar JSON Interchangeable Format", 147. MPEG MEETING; 20240715 - 20240719; SAPPORO; (MOTION PICTURE EXPERT GROUP OR ISO/IEC JTC1/SC29/WG11), , no. m68986 10 July 2024 (2024-07-10), XP030322670, Retrieved from the Internet: URL:https://dms.mpeg.expert/doc_end_user/d ocuments/147_Sapporo/wg11/m68986-v1-m68986 _avatar_json_Interchangeable_format.zip m68986_avatar_json_Interchangeable_format. docx [retrieved on 2024-07-10] * page 2 - page 4 * ----- | 14 | |
| A | GUEDON ANTOINE ET AL: "SuGaR: Surface-Aligned Gaussian Splatting for Efficient 3D Mesh Reconstruction and High-Quality Mesh Rendering", 2024 IEEE/CVF CONFERENCE ON COMPUTER VISION AND PATTERN RECOGNITION (CVPR), IEEE, 16 June 2024 (2024-06-16), pages 5354-5363, XP034694371, DOI: 10.1109/CVPR52733.2024.00512 [retrieved on 2024-09-16] * page 4, column 2, paragraph 1 - page 7, column 1, paragraph 3 * ----- | 1-15 | **TECHNICAL FIELDS SEARCHED (IPC)** |

-/--

The present search report has been drawn up for all claims

| Place of search | Date of completion of the search | Examiner |
|---|---|---|
| Munich | 18 December 2024 | Morawski, Igor |

EPO FORM 1503 03.82 (P04C01)

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................................
& : member of the same patent family, corresponding
   document

Europäisches
Patentamt

European
Patent Office

Office européen
des brevets

# EUROPEAN SEARCH REPORT

**Application Number**

EP 24 30 6566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUFEI WANG ET AL: "ContextGS: Compact 3D Gaussian Splatting with Anchor Level Context Model", ARXIV.ORG, CORNELL UNIVERSITY LIBRARY, 201 OLIN LIBRARY CORNELL UNIVERSITY ITHACA, NY 14853, 31 May 2024 (2024-05-31), XP091773771, * page 3, paragraph 3 - page 7, paragraph 1 * | 1-15 | |

-----

TECHNICAL FIELDS
SEARCHED      (IPC)

The present search report has been drawn up for all claims

| Place of search | Date of completion of the search | Examiner |
|---|---|---|
| Munich | 18 December 2024 | Morawski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 3 of 3

## REFERENCES CITED IN THE DESCRIPTION

### Patent documents cited in the description

- EP 24305094 A
- EP 24306025 A
- EP 24306469 A